# EUROPEAN PATENT APPLICATION

(11) **EP 4 752 260 A1**
(43) Date of publication of application: **03.06.2026**
(21) Application number: 24220063.2
(22) Date of filing: 16.12.2024
(51) Int. Cl.: C25B 1/02, C25B 9/00, C25B 9/60, C25B 9/63, C25B 15/08, C25C 1/06, C25C 7/00

(54) **ELECTROLYSIS EQUIPMENT**

(30) Priority: 27.11.2024 TW 113145644
(71) Applicant: Industrial Technology Research Institute, 310401 Hsinchu (TW)
(72) Inventor: Yen, Ming-Huei, Zhubei City, Hsinchu County 302 (TW); Li, Wen-Jin, Taipei City 103002 (TW); Chen, Po-Chuan, New Taipei City 234 (TW); Wang, Cheng-Chuan, Yongjing Township, Changhua County 512 (TW); Lu, Chun-Fu, Hsinchu City 300 (TW); Chou, Ya-Ching, Zhudong Township, Hsinchu County 310 (TW)
(74) Representative: Kurig, Thomas

(57) **Abstract**

Provided is an electrolysis equipment (10, 20, 30), including: a tank (100), which includes an inlet (110), an outlet (120), a vent hole (130) and an upper opening (140); a detachable upper cover (200), which covers the upper opening (140) of the tank (100), and the detachable upper cover (200) includes an inner side (2001) facing the tank (100), an outer side (200E) opposite to the inner side (2001), and a side (200S) of the detachable upper cover (200); an anode device (300), which is fixed to the inner side (2001) of the detachable upper cover (200) with a first bracket set (310); and a cathode device (400), which is removably fixed to the inner side (2001) of the detachable upper cover (200) with a second bracket set (410).

## Description

### BACKGROUND

### Technical Field

The disclosure relates to an electrolysis equipment.

### Description of Related Art

Traditional electrolysis equipment is mostly used for single-phase or two-phase fluids, and solids must be dissolved or melted to proceed.

In addition, traditional electrolysis equipment often includes a tank with a side-opening design, and the cathode is pressed from the bottom of the tank, causing leakage problems on the side surface and the bottom part of the tank.

Moreover, the cathode of traditional electrolysis equipment is not easy to be taken out, causing difficulties in collecting cathodic metal products.

### SUMMARY

Based on the foregoing problems, the disclosure proposes an electrolysis equipment to solve the foregoing problems of the prior art.

An embodiment of the disclosure provides an electrolysis equipment, including: a tank, which includes an inlet, an outlet, a vent hole and an upper opening; a detachable upper cover, which covers the upper opening of the tank, and the detachable upper cover includes an inner side facing the tank, an outer side opposite to the inner side, and a side of the detachable upper cover; an anode device, which is fixed to the inner side of the detachable upper cover with a first bracket set; and a cathode device, which is removably fixed to the inner side of the detachable upper cover with a second bracket set.

Based on the above, the disclosure provides the electrolysis equipment including a three-phase fluid. Through the design of the flow field and the circulation system of the plating tank, the uniformity of the fluid is improved to avoid problems such as clogging or uneven distribution. By the electrochemical method, the metal compound solid in the three-phase fluid is directly reduced to metals. Utilizing the detachable design of the upper cover, the collection of cathodic products and the cleaning of the tank are easier, reducing the chance of leakage. Combining the design of the angle tilting device, the flow field may be further controlled.

In addition, the inlet or/and the outlet may be a tapered design. A maximum width of a junction between the tapered design and the tank may be equal to a width of the tank, and another side of the junction is tapered to facilitate connection to a feed pipeline or/and a discharge pipeline. The tapered design, for example, may be a funnel design, which facilitates the reaction fluid to feed into or/and discharge from the tank to effectively avoid clogging. A common circulation pipeline may be disposed between the inlet and outlet. The common circulation pipeline may be provided with a secondary tank, which may serve as an auxiliary tank, a buffer tank, a temporary storage tank, etc. Two ends of the circulation pipeline are connected to the inlet and the outlet, each of which may be provided with a pump. The main function is to pump or pull the air pressure in the pipe to avoid clogging of the fluid and accelerate the flow of the fluid. The pump may be respectively disposed at the inlet or the outlet of the common circulation pipeline, may also be set up at the same time or at one, or may not be set up at all depending on the actual usage needs.

Furthermore, through the electrolysis equipment including the three-phase fluid provided by the disclosure, waste chemicals and energy consumption generated by dissolution and melting may be significantly reduced, carbon emissions generated by traditional processes may be reduced, and valuable resources may be recycled for usage.

In order to make the features and advantages of the disclosure more comprehensible, the following examples are given and described in detail with the accompanying drawings as follows.

### BRIEF DESCRIPTION OF THE DRAWINGS

FIG. 1A is a schematic view of an electrolysis equipment 10 according to an embodiment of the disclosure.
FIG. 1B is a schematic view of extraction of a detachable upper cover 200 of the electrolysis equipment 10 according to an embodiment of the disclosure.
FIG. 1C is an exploded view of the electrolysis equipment 10 according to an embodiment of the disclosure.
FIG. 1D is a schematic view of a tilting device 500 of the electrolysis equipment 10 according to an embodiment of the disclosure.
FIG. 2A is a schematic view of an electrolysis equipment 20 according to another embodiment of the disclosure.
FIG. 2B is a schematic view of extraction of a detachable upper cover 200 of the electrolysis equipment 20 according to another embodiment of the disclosure.
FIG. 2C is an exploded view of the electrolysis equipment 20 according to another embodiment of the disclosure.
FIG. 2D is a schematic view of a tilting device 500 of the electrolysis equipment 20 according to another embodiment of the disclosure.
FIG. 3A is a schematic view of an electrolysis equipment 30 according to another embodiment of the disclosure.
FIG. 3B is a schematic view of extraction of a detachable upper cover 200 of the electrolysis equipment 30 according to another embodiment of the disclosure.
FIG. 3C is an exploded view of the electrolysis equipment 30 according to another embodiment of the disclosure.
FIG. 3D is a schematic view of a tilting device 500 of the electrolysis equipment 30 according to another embodiment of the disclosure.

### DETAILED DESCRIPTION OF DISCLOSED EMBODIMENTS

Exemplary embodiments will be described in detail hereinafter with reference to the accompanying drawings, but these exemplary embodiments are not intended to limit the scope of the disclosure. In addition, the drawings are for illustration only and may not be drawn to scale. In order to facilitate understanding of the disclosure, the same elements will be given the same reference numerals in the following description.

In addition, terms such as "comprising," "including," and "having" used in the specification are all open-ended terms, which mean "including but not limited to."

Furthermore, the directional terms mentioned in the specification such as "up" and "down" are only used to refer to the directions of the drawings, and are not used to limit the disclosure. Therefore, it will be understood that "on" is used interchangeably with "under" and that when an element is placed "on" another element, it may be placed directly on the other element or intervening elements may be present. On the other hand, when one component is specifically placed "directly on" another component, there are no intervening components between the two.

As used herein, "about," "approximately" or "substantially" includes the values as mentioned and the average values within the range of acceptable deviations that can be determined by those of ordinary skill in the art. Consider to the specific amount of errors related to the measurements (that is, the limitations of the measurement system), the meaning of "about" may be, for example, referred to a value within one or more standard deviations of the value, or within ±30%, ±20%, ±10%, ±5%. Furthermore, the "about," "approximately" or "substantially" used herein may be based on the optical property, etching property or other properties to select a more acceptable deviation range or standard deviation, but may not apply one standard deviation to all properties.

The terms used herein are used to merely describe exemplary embodiments and are not used to limit the disclosure. In this case, unless indicated in the context specifically, otherwise the singular forms include the plural forms.

### Embodiment 1

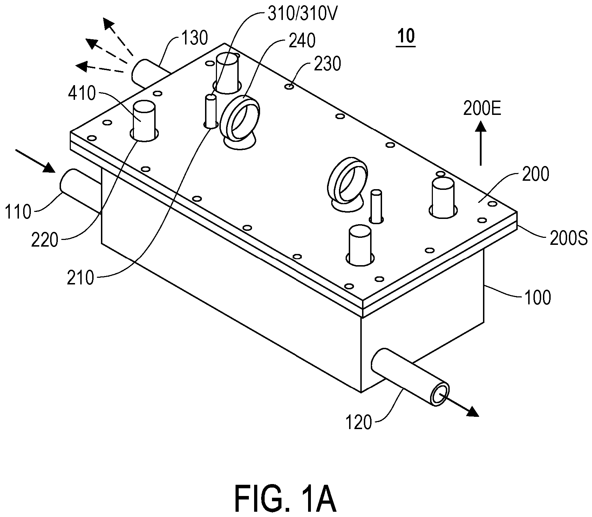

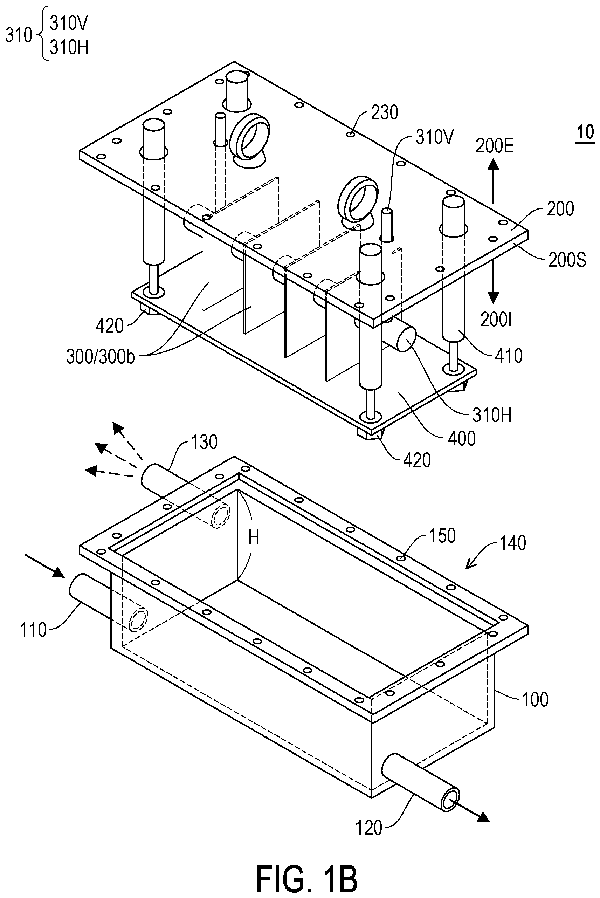

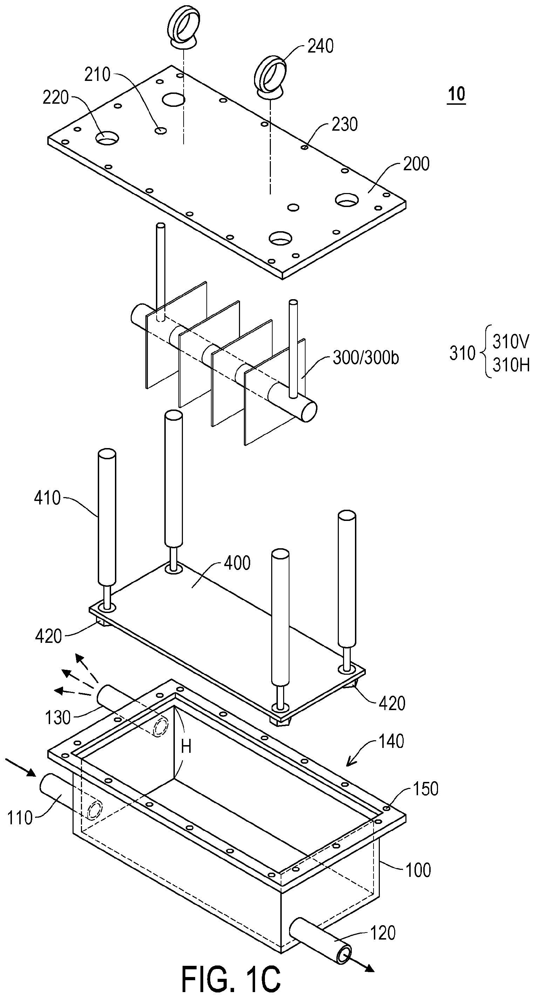

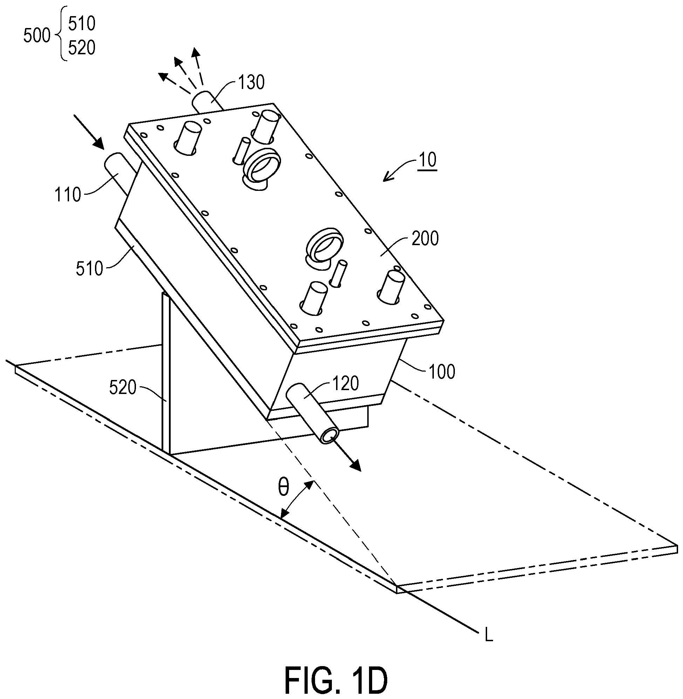

Please refer to FIG. 1A to FIG. 1D. FIG. 1A is a schematic view of an electrolysis equipment 10. FIG. 1B is a schematic view of extraction of a detachable upper cover 200 of the electrolysis equipment 10. FIG. 1C is an exploded view of the electrolysis equipment 10. FIG. 1D is a schematic view of a tilting device 500 of the electrolysis equipment 10.

First, please refer to FIG. 1A and FIG. 1B at the same time. The electrolysis equipment 10 includes a tank 100, a detachable upper cover 200, an anode device 300 and a cathode device 400.

Please refer to FIG. 1B. The tank 100 includes an inlet 110, an outlet 120, a vent hole 130 and an upper opening 140.

Please refer to FIG. 1A and FIG. 1B at the same time. The detachable upper cover 200 covers the upper opening 140 of the tank 100, and the detachable upper cover 200 includes an inner side 200I facing the tank 100, an outer side 200E opposite to the inner side 2001, and a side 200S of the detachable upper cover 200.

The anode device 300 is fixed to the inner side 200I of the detachable upper cover 200 with a first bracket set 310, and the cathode device 400 is removably fixed to the inner side 200I of the detachable upper cover 200 with a second bracket set 410.

The tank 100 and the detachable upper cover 200 may be fixed to each other in various manners. For example, as shown in FIG. 1B, the tank 100 has a tank fixing hole 150, and the detachable upper cover 200 has a detachable upper cover fixing hole 230. Fixing members (not shown) such as screws and O-rings are used to pass through the tank fixing hole 150 and the detachable upper cover fixing hole 230 to fix the tank 100 and the detachable upper cover 200, but the disclosure is not limited thereto. All suitable fixing manners may be applied to the disclosure.

In some embodiments, the inlet 110, the outlet 120 and the vent hole 130 may be formed on the tank 100 in a welding manner to significantly reduce leakage problems caused by various holes and components on the tank of the existing electrolysis equipment.

In some embodiments, the inlet 110 and the outlet 120 may be round tubes, as shown in FIG. 1A to FIG. 1D, but the disclosure is not limited thereto. The patterns and shapes of the inlet 110 and the outlet 120 may be adjusted based on the design and the overall needs of the electrolysis equipment 10.

In some embodiments, the inlet 110 and the outlet 120 are disposed opposite each other to facilitate the smoothness of the flow field of feeding and discharging. For example, the inlet 110 is disposed on the left side of the tank 100, and the outlet 120 is disposed on the right side of tank 100, as shown in FIG. 1A to FIG. 1D, but the disclosure is not limited thereto. Alternatively, the inlet 110 is disposed on the front side of the tank 100, and the outlet 120 is disposed on the back side of the tank 100.

In some embodiments, the vent hole 130 and the inlet 110 may be disposed on the same side. As shown in FIG. 1A to FIG. 1D, the inlet 110 and the vent hole 130 are both disposed on the left side of the tank 100, but the disclosure is not limited thereto.

In some embodiments, the vent hole 130 may be disposed at more than half of a height H of the tank 100, that is, the vent hole 130 is disposed closer to the upper half part of the tank 100 to facilitate the emission of the reacting gas. If the vent hole 130 is disposed at less than half of the height H of the tank 100, that is, when the vent hole 130 is disposed closer to the bottom part of the tank 100, problems such as reflux of the materials to be processed may be generated.

Furthermore, the electrolysis equipment 10 further includes a tilting device 500, so that the tank 100 are tilted to a configuration angle θ with a horizontal plane L, as shown in FIG. 1D. The configuration angle θ may be correspondingly adjusted, depending on needs, to control the flow field to improve the uniformity of the fluid and avoid problems such as clogging or uneven distribution.

In some embodiments, the configuration angle θ may be correspondingly adjusted with the reaction steps. For example, the configuration angle θ may be configured to 45 degrees during feeding to facilitate the inflow of the waste materials to be processed. Then, the configuration angle θ is configured to 0 degrees during an electrolysis reaction to facilitate the uniformity of the electrolysis reaction. Finally, the configuration angle θ is configured to 90 degrees during discharging to facilitate the discharge of the processed waste materials. The foregoing specific numerical values of the configuration angle θ are not intended to limit the disclosure, but are merely descriptions to provide a better understanding.

In some embodiments, the configuration angle θ may also be dynamically changed with time while an electrolysis reaction is being performed. For example, the configuration angle θ is set as 10 degrees at a first time, the configuration angle θ is set as -10 degrees at a subsequent second time, the configuration angle θ is set as 10 degrees in a subsequent third time, and the configuration angle θ is set as -10 degrees in a subsequent fourth time. The angle configuration is repeatedly changed several times to facilitate the uniformity of the electrolysis reaction and increase the reaction rate of the electrolysis reaction. The foregoing specific numerical values of the configuration angle θ and the changing manner of the angle configuration are not intended to limit the disclosure, but are merely descriptions to provide a better understanding.

The tilting device 500 may tilt the tank 100 to the configuration angle θ with the horizontal plane L through various configuration devices. For example, the tilting device 500 may include a carrier 510 and a bracket 520, as shown in FIG. 1D, to carry the tank 100, and may tilt to any of the foregoing configuration angles θ, but the tilting device 500 is not limited thereto. Any tilting device may be used in the electrolysis equipment of the disclosure.

As mentioned above, the anode device 300 is fixed to the inner side 200I of the detachable upper cover 200 with the first bracket set 310, and the cathode device 400 is removably fixed to the inner side 200I of the detachable upper cover 200 with the second bracket set 410. The first bracket set 310 and the second bracket set 410 may be fixed to the inner side 200I of the detachable upper cover 200 in various manners. For example, please refer to FIG. 1A to FIG. 1C at the same time. The detachable upper cover 200 includes multiple first bracket set vias 210 and multiple second bracket set vias 220, so that the first bracket set 310 passes through the multiple first bracket set vias 210, and the second bracket set 410 passes through the multiple second bracket sets vias 220 to fix the first bracket set 310 and the second bracket set 410 to the inner side 200I of the detachable upper cover 200, but the disclosure is not limited thereto.

Furthermore, the first bracket set 310 is connected to an anodic potential, and the second bracket set 410 is connected to a cathodic potential, so that an electrolysis reaction inside the tank 100 may be performed between the anode device 300 and the cathode device 400 as shown in FIG. 1B.

That is, the liquid or slurry material to be processed including metal compounds, such as scrap metal sludge, etc., is introduced into the tank 100 of the electrolysis equipment 10 through the inlet 110 of the tank 100 from the outside of the electrolysis equipment 10. Then, by an electrochemical method, the electrolysis reaction is performed between the anode device 300 connected to the anodic potential and the cathode device 400 connected to the cathodic potential in an alkaline environment. The metal compound solid in the material to be processed is directly reduced to metals on the cathode device 400, and the gas generated may be discharged out of the electrolysis equipment 10 through the vent hole 130 of the tank 100 to complete the electrolysis equipment 10 including a three-phase fluid. Since electricity is used to replace the chemical energy of a reducing agent in the electrolytic manner, there is no direct carbon emission in the process, which is compatible with the trend of environmental protection in low-carbon processes.

For example, after the material to be processed including Fe₂O₃ and Fe₃O₄ are processed by the foregoing electrolysis equipment 10, O₂ generated may be discharged from the vent hole 130 of the tank 100, and a Fe product with a purity greater than 95% or even greater than 98% may be generated on the cathode device 400, having a better metal production purity than Fe with a purity of about 90% generated by the existing electrolysis equipment. The foregoing purities are results obtained from performing a purity analysis to the products by an energy-dispersive X-ray spectroscopy (EDS or EDX) and inductively coupled plasma optical emission spectrometry (ICP-OES).

Moreover, the electrolysis equipment of the disclosure may be used in the electrolysis of many elements, such as iron (Fe), magnesium (Mg), titanium (Ti), vanadium (V), chromium (Cr), manganese (Mn), cobalt (Co), nickel (Ni), copper (Cu), sodium (Na), molybdenum (Mo), zinc (Zn), etc., but the disclosure is not limited thereto.

Please continue to refer to FIG. 1A to FIG. 1C at the same time.

In some embodiments, the detachable upper cover 200 may further include an extraction device 240 if needed. The extraction device 240 may be disposed on the outer side 200E of the detachable upper cover 200 or/and on the side 200S of the detachable upper cover 200 for the ease of taking out the anode device 300 and the cathode device 400 fixed to the inner side 200I of the detachable upper cover 200 together with the detachable upper cover 200 from the tank 100, so that the collection of cathodic products on the cathode device 400 and the cleaning of the tank 100 may be more convenient.

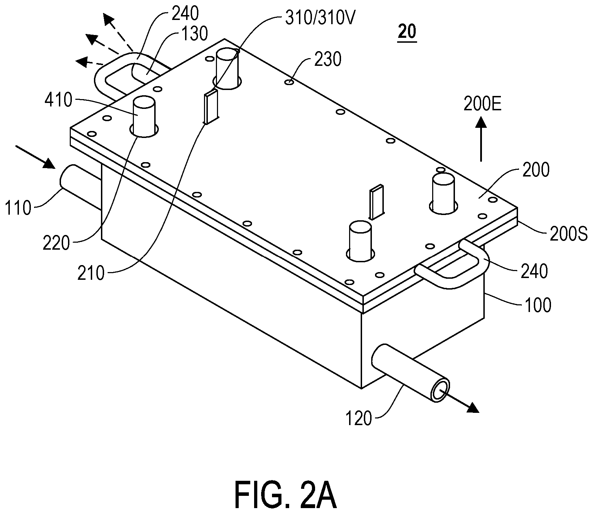

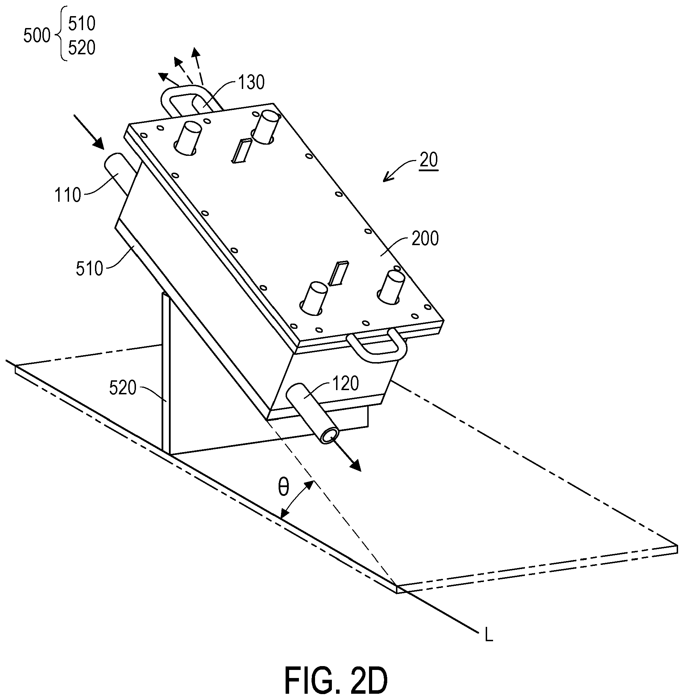

In some embodiments, the extraction device 240 may be a hanging ring (as shown in FIG. 1A to FIG. 1D) or a handle (as shown in FIG. 2A to FIG. 2D), etc., but the disclosure is not limited thereto. For example, the hanging ring may be disposed on the outer side 200E of the detachable upper cover 200, as shown in FIG. 1A to FIG. 1D. Alternatively, the handle may be disposed on the side 200S of the detachable upper cover 200, as shown in FIG. 2A to FIG. 2D, but the disclosure is not limited thereto.

Please refer to the electrolysis equipment 10 in FIG. 1B to FIG. 1D at the same time. In some embodiments, the anode device 300 may include multiple anode fins 300b.

In some embodiments, the multiple anode fins 300b are disposed perpendicular to the inner side 200I of the detachable upper cover 200 with the first bracket set 310, as shown in FIG. 1B. The first bracket set 310 may include a first perpendicular bracket set 310V perpendicular to the detachable upper cover 200 and a first parallel bracket set 310H parallel to the detachable upper cover 200. The first perpendicular bracket set 310V is connected to the first parallel bracket set 310H, which passes through the multiple anode fins 300b.

Furthermore, the multiple anode fins 300b may be disposed perpendicular or oblique to the inner side 200I of the detachable upper cover 200 with the first bracket set 310. As shown in FIG. 1B, the multiple anode fins 300b may be disposed perpendicular to the inner side 200I of the detachable upper cover 200 with the first bracket set 310.

Please continue to refer to the electrolysis equipment 10 in FIG. 1B to FIG. 1D at the same time. In some embodiments, the cathode device 400 may include a cathode plate 400a.

In some embodiments, the cathode plate 400a is disposed parallel to the inner side 200I of the detachable upper cover 200 with the second bracket set 410 perpendicular to the detachable upper cover 200, as shown in FIG. 1B.

In addition, the second bracket set 410 may include a removable bonding component 420 so that the cathode device 400 may be removed from the second bracket set 410 to collect the metals generated on the cathode device 400 after the electrolysis reaction.

The removable bonding component 420 may include a screw (as shown in FIG. 1B and FIG. 1C) or a latch (not shown), but the disclosure is not limited thereto. Any components that may be easily removed may be applied to the disclosure.

### Embodiment 2

The electrolysis equipment 20 of Embodiment 2 is roughly the same as the electrolysis equipment 10 of Embodiment 1. The electrolysis equipment 20 in FIG. 2A to FIG. 2D is also respectively relative to the electrolysis equipment 10 in FIG. 1A to FIG. 1D. The function and configuration are roughly the same except for the following description, so the same parts will not be described again.

The difference between the electrolysis equipment 20 of Embodiment 2 and the electrolysis equipment 10 of Embodiment 1 is that the extraction device 240 of Embodiment 1 is a hanging ring, as shown in FIG. 1A to FIG. 1D. However, an extraction device 240 of Embodiment 2 is a handle, as shown in FIG. 2A to FIG. 2D. The different extraction devices 240 in Embodiments 1 and 2 are used to illustrate that the disclosure may have various extraction devices 240.

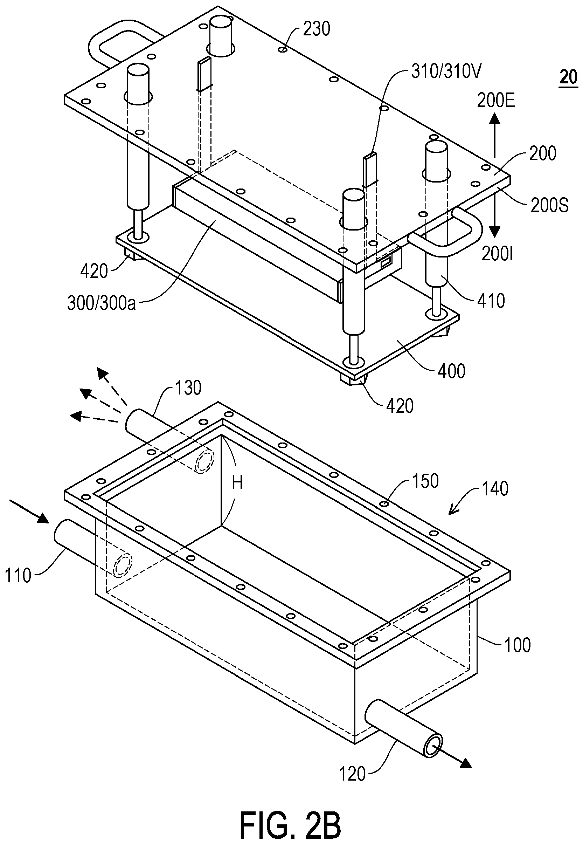

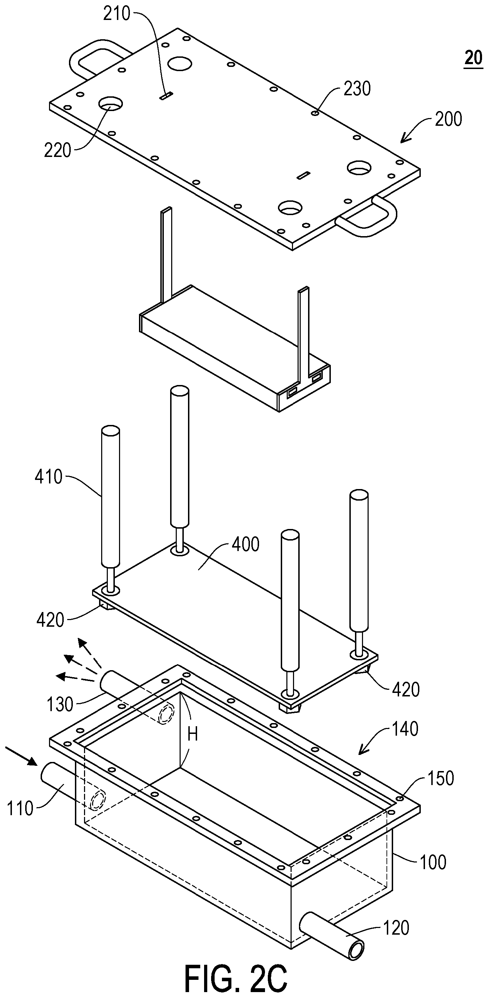

In addition, the anode device 300 of Embodiment 1 is the multiple anode fins 300b, as shown in FIG. 1B to FIG. 1D. However, an anode device 300 of Embodiment 2 is an anode plate 300a, as shown in FIG. 2B and FIG. 2C.

In some embodiments, the anode plate 300a may be disposed parallel to the inner side 200I of the detachable upper cover 200 with the first bracket set 310 perpendicular to the detachable upper cover 200. As shown in FIG. 2B and FIG. 2C, the first bracket set 310 includes the first perpendicular bracket set 310V.

### Embodiment 3

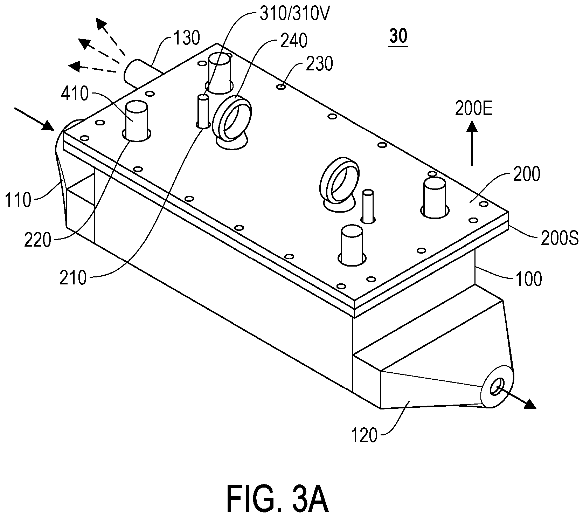

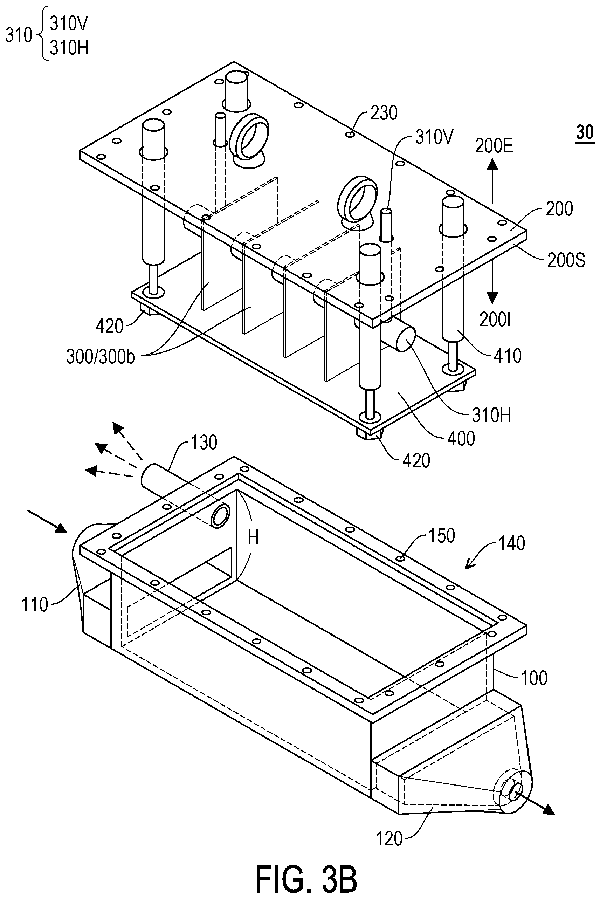

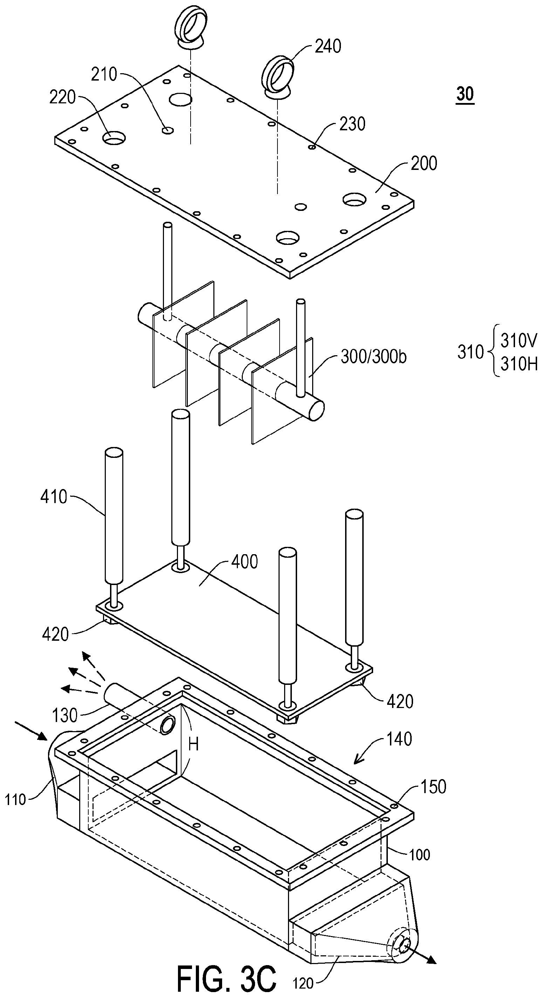

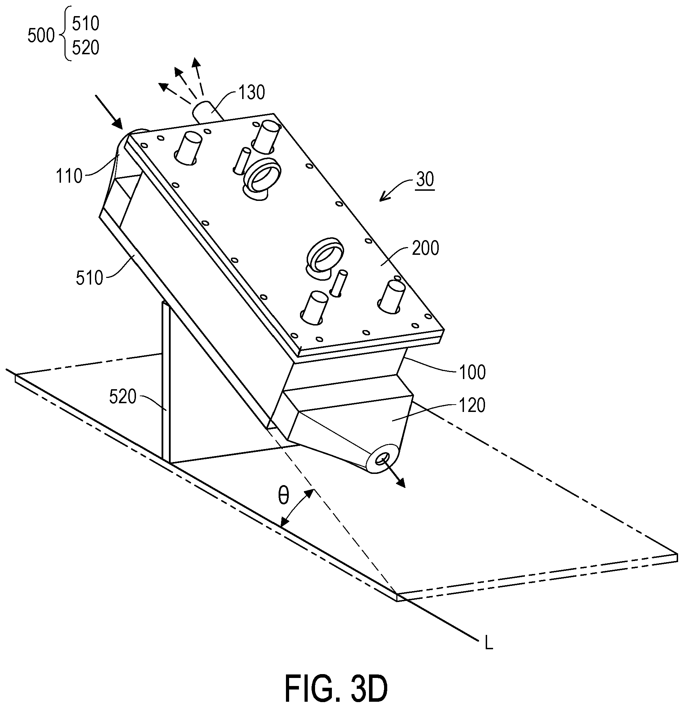

The electrolysis equipment 30 of Embodiment 3 is roughly the same as the electrolysis equipment 10 of Embodiment 1. The electrolysis equipment 30 in FIG. 3A to FIG. 3D is also respectively relative to the electrolysis equipment 10 in FIG. 1A to FIG. 1D. The function and configuration are roughly the same except for the following description, so the same parts will not be described again.

The difference between the electrolysis equipment 30 of Embodiment 3 and the electrolysis equipment 10 of Embodiment 1 lies in the design of the inlet 110 and the outlet 120. As shown in FIG. 3A to FIG. 3D, an inlet 110 or/and an outlet may be a tapered design. A maximum width of a junction between the tapered design and the tank 100 may be equal to a width of the tank 100. Another side of the junction is tapered to facilitate connection to a feed pipeline (not shown) or/and a discharge pipeline (not shown). The tapered design may be implemented at the inlet 110 and the outlet 120 at the same time or set up at one of the inlet 110 and the outlet 120 depending on the actual usage needs.

In some embodiments, the tapered design may be, for example, a funnel design to facilitate the reacting fluid to feed into the tank 100 or/and to discharge from the tank 100 to effectively avoid clogging.

In some embodiments, a common circulation pipeline (not shown) may be disposed between the inlet 110 and the outlet 120. The common circulation pipeline may be provided with a secondary tank, which may be used as an auxiliary tank, a buffer tank, a temporary storage tank, etc. Two ends of the circulation pipeline are connected to the inlet 110 and the outlet 120, each of which may be provided with a pump (not shown). The main function of the pump is to pump or pull the air pressure in the pipe to avoid clogging of the fluid and accelerate the flow of the fluid. The pump may be respectively disposed at the inlet 110 or the outlet 120 of the common circulation pipeline, may also be set up at the same time or at one, or may not be set up at all depending on the actual usage needs

In some embodiments, the openings of the inlet 110 and the outlet 120 of the tapered design at another end of the tank 100 may be circular, as shown in the outlet 120 in FIG. 3A to FIG. 3D to facilitate connection with other components, but the disclosure is not limited thereto.

The differences between the extraction devices 240, the anode devices 300, the inlets 110, and the outlets 120 in the foregoing Embodiments 1 to 3 may be independently selected and adjusted based on needs. For example, the anode plate 300a of Embodiment 2 may be selected in conjunction with the inlet 110 or/and the outlet 120 of the tapered design of Embodiment 3 to manufacture an electrolysis equipment. Alternatively, the multiple anode fins 300b of Embodiment 1 are selected in conjunction with the extraction device 240 of Embodiment 2 and the inlet 110 or/and the outlet 120 of the tapered design of Embodiment 3 to manufacture the electrolysis equipment.

Based on the above, the disclosure provides the electrolysis equipment including the three-phase fluid. Through the design of the flow field and the circulation system of the plating tank, the uniformity of the fluid is improved to avoid problems such as clogging or uneven distribution. By the electrochemical method, the metal compound solid in the three-phase fluid is directly reduced to metals. Utilizing the detachable design of the upper cover, the collection of cathodic products and the cleaning of the tank are easier, reducing the chance of leakage. Combining with the design of the angle tilting device, the flow field may be further controlled.

Moreover, the inlet and/or outlet may be a tapered design. A maximum width of a junction between the tapered design and the tank may be equal to a width of the tank, and another side of the junction is tapered to facilitate connection to a feed pipeline or/and a discharge pipeline. The tapered design, for example, may be a funnel design, which facilitates the reacting fluid to feed into or/and discharge from the tank to effectively avoid clogging. A common circulation pipeline may be disposed between the inlet and outlet. The common circulation pipeline may be provided with a secondary tank, which may serve as an auxiliary tank, a buffer tank, a temporary storage tank, etc. Two ends of the circulation pipeline are connected to the inlet and the outlet, each of which may be provided with a pump. The main function of the pump is to pump or pull the air pressure in the pipe to avoid clogging of the fluid and accelerate the flow of the fluid. The pump may be respectively disposed at the inlet or the outlet of the common circulation pipeline, may also be set up at the same time or at one, or may not be set up at all depending on the actual usage needs.

Furthermore, through the electrolysis equipment including the three-phase fluid provided by the disclosure, waste chemicals and energy consumption generated by dissolution and melting may be significantly reduced, carbon emissions generated by traditional processes may be reduced, and valuable resources may be recycled for usage.

### DESCRIPTION OF SYMBOLS

10 , 20 , 30: electrolysis equipment
100: tank
110: inlet
120: outlet
130: vent hole
140: upper opening
150: tank fixing hole
200: detachable upper cover
200E: outer side
200I: inner side
200S: side
210: first bracket set vias
220: second bracket set vias
230: fixing hole
240: extraction device
300: anode device
300a: anode plate
300b: anode fins
310: first bracket set
310V: first perpendicular bracket set
310H: first parallel bracket set
400: cathode device
410: second bracket set
420: bonding component
500: tilting device
510: carrier
520: bracket
H: height
L: horizontal plane
*θ*: configuration angle

## Claims

1. An electrolysis equipment (10, 20, 30), comprising:
a tank (100), comprising an inlet (110), an outlet (120), a vent hole (130) and an upper opening (140);
a detachable upper cover (200), covering the upper opening (140) of the tank (100), and the detachable upper cover (200) comprising an inner side (200I) facing the tank (100), an outer side (200E) opposite to the inner side (200I), and a side (200S) of the detachable upper cover (200);
an anode device (300), fixed to the inner side (200I) of the detachable upper cover (200) with a first bracket set (310); and
a cathode device (400), removably fixed to the inner side (200I) of the detachable upper cover (200) with a second bracket set (410).

2. The electrolysis equipment (10, 20, 30) according to claim 1, wherein the inlet (110), the outlet (120) and the vent hole (130) are formed on the tank (100) in a welding manner.

3. The electrolysis equipment (10, 20, 30) according to claim 1, wherein the inlet (110) and the outlet (120) are disposed opposite each other.

4. The electrolysis equipment (10, 20, 30) according to claim 1, wherein the inlet (110) or/and the outlet (120) is a tapered design, wherein a maximum width of a junction between the tapered design and the tank may be equal to a width of the tank, and another side of the junction is tapered to facilitate connection to a feed pipeline or/and a discharge pipeline.

5. The electrolysis equipment (10, 20, 30) according to claim 1, wherein the vent hole (130) and the inlet (110) are disposed on a same side.

6. The electrolysis equipment (10, 20, 30) according to claim 1, wherein the vent hole (130) is disposed at more than half of a height (H) of the tank (100).

7. The electrolysis equipment (10, 20, 30) according to claim 1, further comprising a tilting device (500) to allow the tank (100) to tilt to a configuration angle ( *θ* ) with a horizontal plane (L).

8. The electrolysis equipment (10, 20, 30) according to claim 7, wherein the tilting device (500) comprises a carrier (510) to carry the tank (500) and may be tilted to the configuration angle (*θ* ).

9. The electrolysis equipment (10, 20, 30) according to claim 1, wherein the detachable upper cover (200) comprises a plurality of first bracket set vias (210) and a plurality of second bracket set vias (220), wherein the first bracket set (310) passes through the plurality of first bracket set vias (210), and the second bracket set (410) passes through the plurality of second bracket set vias (220).

10. The electrolysis equipment (10, 20, 30) according to claim 1, wherein the first bracket set (310) is connected to an anodic potential, and the second bracket set (410) is connected to a cathodic potential.

11. The electrolysis equipment (10, 20, 30) according to claim 1, wherein the detachable upper cover (200) further comprises an extraction device (240) that is disposed on the outer side (200E) of the detachable upper cover (200) or/and on the side (200S) of the detachable upper cover (200).

12. The electrolysis equipment (10, 20, 30) according to claim 11, wherein the extraction device (240) comprises a hanging ring or a handle.

13. The electrolysis equipment (10, 20, 30) according to claim 1, wherein the anode device (300) comprises an anode plate (300a) or a plurality of anode fins (300b).

14. The electrolysis equipment (20) according to claim 13, wherein the anode plate (300a) is disposed parallel to the inner side (200I) of the detachable upper cover (200) with the first bracket set (310) perpendicular to the detachable upper cover (200).

15. The electrolysis equipment (10, 30) according to claim 13, wherein the plurality of anode fins (300b) are disposed perpendicular to the inner side (200I) of the detachable upper cover (200) with the first bracket set (310), wherein the first bracket set (310) comprises a first perpendicular bracket set (310V) that is perpendicular to the detachable upper cover (200) and a first parallel bracket set (310H) that is parallel to the detachable upper cover (200), wherein the first perpendicular bracket set (310V) is connected to the first parallel bracket set (310H) that passes through the plurality of anode fins (300b).

16. The electrolysis equipment (10, 30) according to claim 13, wherein the plurality of anode fins (300b) are disposed perpendicular or oblique to the inner side (200I) of the detachable upper cover (200) with the first bracket set (310).

17. The electrolysis equipment (10, 20, 30) according to claim 1, wherein the cathode device (400) comprises a cathode plate.

18. The electrolysis equipment (10, 20, 30) according to claim 17, wherein the cathode plate is disposed parallel to the inner side (200I) of the detachable upper cover (200) with the second bracket set (410) perpendicular to the detachable upper cover (200).

19. The electrolysis equipment (10, 20, 30) according to claim 1, wherein the second bracket set (410) comprises a removable bonding component (420).

20. The electrolysis equipment (10, 20, 30) according to claim 19, wherein the removable bonding component (420) comprises a screw or a latch.

## Amended claims

### Amended claims in accordance with Rule 137(2) EPC.

1. An electrolysis equipment (10, 20, 30), comprising:
a tank (100), comprising an inlet (110), an outlet (120), a vent hole (130) and an upper opening (140);
a detachable upper cover (200), covering the upper opening (140) of the tank (100), and the detachable upper cover (200) comprising an inner side (200I) facing the tank (100), an outer side (200E) opposite to the inner side (200I), and a side (200S) of the detachable upper cover (200);
an anode device (300), fixed to the inner side (200I) of the detachable upper cover (200) with a first bracket set (310); and
a cathode device (400), removably fixed to the inner side (200I) of the detachable upper cover (200) with a second bracket set (410), **characterized in that** the cathode device (400) comprises a cathode plate, wherein the cathode plate is disposed parallel to the inner side (200I) of the detachable upper cover (200) with the second bracket set (410) perpendicular to the detachable upper cover (200).

2. The electrolysis equipment (10, 20, 30) according to claim 1, wherein the inlet (110), the outlet (120) and the vent hole (130) are formed on the tank (100) in a welding manner.

3. The electrolysis equipment (10, 20, 30) according to claim 1, wherein the inlet (110) is on a first sidewall of the tank (100) and the outlet (120) is on a second sidewall of the tank (100), wherein the first sidewall of the thank (100) and the second sidewall of the tank (100) are disposed opposite each other.

4. The electrolysis equipment (10, 20, 30) according to claim 1, wherein the inlet (110) or/and the outlet (120) is a tapered design, wherein a maximum width of a junction between the tapered design and the tank may be equal to a width of the tank, and another side of the junction is tapered to facilitate connection to a feed pipeline or/and a discharge pipeline.

5. The electrolysis equipment (10, 20, 30) according to claim 1, wherein the vent hole (130) and the inlet (110) are disposed on a same side of the tank (100).

6. The electrolysis equipment (10, 20, 30) according to claim 1, wherein the vent hole (130) is disposed at more than half of a height (H) of the tank (100).

7. The electrolysis equipment (10, 20, 30) according to claim 1, further comprising a tilting device (500) to allow the tank (100) to tilt to a configuration angle (*θ*) with a horizontal plane (L).

8. The electrolysis equipment (10, 20, 30) according to claim 7, wherein the tilting device (500) comprises a carrier (510) to carry the tank (500) and may be tilted to the configuration angle (*θ*).

9. The electrolysis equipment (10, 20, 30) according to claim 1, wherein the detachable upper cover (200) comprises a plurality of first bracket set vias (210) and a plurality of second bracket set vias (220), wherein the first bracket set (310) passes through the plurality of first bracket set vias (210), and the second bracket set (410) passes through the plurality of second bracket set vias (220).

10. The electrolysis equipment (10, 20, 30) according to claim 1, wherein the anode device (300) comprises an anode plate (300a) or a plurality of anode fins (300b).

11. The electrolysis equipment (20) according to claim 10, wherein the anode plate (300a) is disposed parallel to the inner side (200I) of the detachable upper cover (200) with the first bracket set (310) perpendicular to the detachable upper cover (200).

12. The electrolysis equipment (10, 30) according to claim 10, wherein the plurality of anode fins (300b) are disposed perpendicular to the inner side (200I) of the detachable upper cover (200) with the first bracket set (310), wherein the first bracket set (310) comprises a first perpendicular bracket set (310V) that is perpendicular to the detachable upper cover (200) and a first parallel bracket set (310H) that is parallel to the detachable upper cover (200), wherein the first perpendicular bracket set (310V) is connected to the first parallel bracket set (310H) that passes through the plurality of anode fins (300b).

13. The electrolysis equipment (10, 30) according to claim 10, wherein the plurality of anode fins (300b) are disposed perpendicular or oblique to the inner side (200I) of the detachable upper cover (200) with the first bracket set (310).

14. The electrolysis equipment (10, 20, 30) according to claim 1, wherein the second bracket set (410) comprises a removable bonding component (420).

15. The electrolysis equipment (10, 20, 30) according to claim 14, wherein the removable bonding component (420) comprises a screw or a latch.
